# EUROPÄISCHE PATENTSCHRIFT

(11) **EP 3 210 687 B1**
(45) Veröffentlichungstag und Bekanntmachung des Hinweises auf die Patenterteilung: **19.09.2018**
(21) Anmeldenummer: 17157282.9
(22) Anmeldetag: 22.02.2017
(51) Int. Cl.: B21D 43/00, B21D 43/18, B21F 23/00

(54) **VERFAHREN UND VORRICHTUNG ZUR BEREITSTELLUNG VON METALLSTÄBEN**
METHOD AND DEVICE FOR PROVIDING METAL RODS
PROCÉDÉ ET DISPOSITIF DE PRODUCTION DE TIGES MÉTALLIQUES

(30) Priorität: 23.02.2016 AT 501232016
(43) Veröffentlichungstag der Anmeldung: 30.08.2017
(73) Patentinhaber: Filzmoser, Franz, 4600 Wels-Thalheim (AT)
(72) Erfinder: Filzmoser, Franz, 4600 Wels-Thalheim (AT)
(74) Vertreter: Sonn & Partner Patentanwälte

(56) Entgegenhaltungen:
- EP-A2- 0 371 956
- DE-U1- 29 714 110
- DE-U1-202015 000 631

## Beschreibung

Die Erfindung betrifft ein Verfahren zur Bereitstellung von Metallstäben, welche Metallstäbe von Rollen abgewickelt und in einer Richtmaschine in vorgegebenen Längen hergestellt werden.

Weiters betrifft die Erfindung eine Vorrichtung zur Bereitstellung von Metallstäben, welche Metallstäbe von Rollen abgewickelt und in einer Richtmaschine in vorgegebenen Längen hergestellt sind.

Solche Verfahren und Vorrichtungen sind bekannt aus beispielsweise EP 0 371 956 A2.

Die Erfindung bezieht sich hauptsächlich, aber nicht ausschließlich, auf die Bereitstellung von Metallstäben, wie sie für die Herstellung von Bewehrungsmatten im Stahlbetonbau eingesetzt werden.

Bei der Herstellung von Bewehrungsmatten kommen Richtmaschinen zum Einsatz, in welchen die Längsstäbe und Querstäbe für die Bewehrungsmatten in den gewünschten Längen hergestellt werden. Der die Längsstäbe und Querstäbe bildende Rundstahl liegt dabei üblicherweise auf entsprechenden Rollen vor. Nachteilig bei der Herstellung von Bewehrungsmatten, aber auch bei anderen Verfahren zur Verarbeitung von Metallstäben, ist die erhebliche Lärmentwicklung beim Zuführen der Metallstäbe von der Richtmaschine zum gewünschten Verarbeitungsort, beispielsweise die Schweißeinrichtung zum Herstellen der Bewehrungsmatten. Darüber hinaus sind die zurückzulegenden Wege von der Richtmaschine zum jeweiligen Verarbeitungsort relativ lang, wodurch viel Platz in Anspruch genommen und die Verarbeitungszeit verlängert wird.

Die Aufgabe der vorliegenden Erfindung besteht in der Schaffung eines Verfahrens und einer Vorrichtung zur Bereitstellung von Metallstäben, welche eine schonende und platzsparende Manipulation der Metallstäbe mit möglichst geringer Lärmentwicklung zulässt. Das Verfahren und die Vorrichtung sollen möglichst einfach und kostengünstig herstellbar und implementierbar sein. Nachteile bekannter Verfahren und Vorrichtung sollen vermieden oder zumindest reduziert werden.

Gelöst wird die erfindungsgemäße Aufgabe in verfahrensmäßiger Hinsicht dadurch, dass die Metallstäbe von der Richtmaschine in den vorgegebenen Längen sukzessive in Längsrichtung der Metallstäbe auf eine Aufnahme- und Übergabevorrichtung befördert werden, und von der Aufnahme- und Übergabevorrichtung in Querrichtung der Metallstäbe auf eine zumindest zwei parallel angeordnete Magnetketten mit Magneten aufweisende Magnetfördereinrichtung übergeben und in Querrichtung der Metallstäbe zum gewünschten Verarbeitungsort befördert werden. Somit werden die Metallstäbe in axialer Richtung von der Richtmaschine in die Aufnahme- und Übergabevorrichtung befördert und nicht wie bei bekannten Verfahren und Vorrichtung von der Richtmaschine über eine Schräge zum gewünschten Verarbeitungsort fallen gelassen. Von der Aufnahme- und Übergabevorrichtung werden die Metallstäbe hintereinander quer zur Längsrichtung der Metallstäbe auf die Magnetfördereinrichtung übergeben und schließlich mit der Magnetfördereinrichtung an den gewünschten Verarbeitungsort befördert. Sobald die Metallstäbe von den Magneten der Magnetketten der Magnetfördereinrichtung angezogen werden ist eine Lärmentwicklung während der Weiterbeförderung der Metallstäbe durch die Magnetfördereinrichtung im Wesentlichen ausgeschlossen. Im Vergleich zu herkömmlichen Verfahren werden somit die Metallstäbe sehr schonend und somit mit geringer Lärmentwicklung von der Richtmaschine an den jeweiligen Verarbeitungsort übergeben. Unter der Voraussetzung der entsprechenden Anordnung der Aufnahme- und Übergabevorrichtung und Magnetfördereinrichtung kann dies auch in sehr platzsparender Weise erfolgen.

Gemäß einem Merkmal der Erfindung werden die Metallstäbe von der Aufnahme- und Übergabevorrichtung auf eine im Wesentlichen horizontal unter der Aufnahme- und Übergabevorrichtung angeordnete Magnetfördereinrichtung übergeben. Bei einer horizontalen Anordnung der Magnetfördereinrichtung brauchen die verwendeten Magnete keine so hohe Anziehungskraft aufweisen, da die Metallstäbe ohnedies durch die Schwerkraft an die Magnetketten der Magnetfördereinrichtung gepresst werden. Andererseits nimmt eine horizontale Anordnung mehr Grundfläche in Anspruch.

Alternativ dazu können die Metallstäbe von der Aufnahme- und Übergabevorrichtung auch auf eine im Wesentlichen vertikal oder schräg neben der Aufnahme- und Übergabevorrichtung angeordnete Magnetfördereinrichtung übergeben werden. Eine vertikale oder im Wesentlichen vertikale Anordnung der Magnetfördereinrichtung neben der Aufnahme- und Übergabevorrichtung kann Vorteile besitzen, da weniger Grundfläche in Anspruch genommen wird oder die Metallstäbe zu einem Verarbeitungsort gebracht werden, der oberhalb oder unterhalb der Richtmaschine angeordnet ist.

Vorzugsweise werden die Metallstäbe im Wesentlichen abstandslos parallel aneinandergereiht auf der Magnetfördereinrichtung angeordnet und zum gewünschten Verarbeitungsort befördert. Dadurch wird eine besonders platzsparende Weiterleitung der Metallstäbe von der Richtmaschine zum jeweiligen Verarbeitungsort erzielt. Die Magnete der Magnetfördereinrichtung können vorzugsweise aktiviert und deaktiviert werden. Auf diese Weise können die Metallstäbe bei Bedarf von den Magnetketten gelöst oder angezogen werden.

Dabei können die Magnete der Magnetfördereinrichtungen elektrisch oder auch mechanisch aktiviert und deaktiviert werden. Die mechanische Aktivierung und Deaktivierung der Magnete der Magnetfördereinrichtungen kann durch Verringerung bzw. Erhöhung des Abstands zwischen den Magneten und der Auflagefläche für die Metallstäbe erzielt werden. Eine elektrische Aktivierung und Deaktivierung der Magnete kann insbesondere durch die Verwendung von Elektromagneten, welche ein- und ausschaltbar sind, erfolgen.

Gemäß einer Variante des Verfahrens werden die Metallstäbe über Greifer von der Aufnahme- und Übergabevorrichtung in Querrichtung der Metallstäbe auf die Magnetfördereinrichtung übergeben. Die Übergabe der Metallstäbe mittels Greifern auf die Magnetfördereinrichtung stellt eine besonders schonende Möglichkeit dar, die auch durch besonders geringe Lärmentwicklung gekennzeichnet ist.

Weiters können die Metallstäbe über Hebeelemente von der Magnetfördereinrichtung gelöst und zum gewünschten Verarbeitungsort befördert werden. In einfachster Weise sind derartige Hebeelemente durch Keile bzw. keilförmige Elemente gebildet, welche den Abstand zwischen den Metallstäben und den Magneten der Magnetketten erhöhen bis die alte Kraft nicht mehr ausreicht und die Metallstäbe abfallen bzw. von einer anderen Fördereinrichtung übernommen werden können.

Gelöst wird die erfindungsgemäße Aufgabe auch durch eine oben genannte Vorrichtung zur Bereitstellung von Metallstäben, bei der eine Aufnahme- und Übergabevorrichtung zur Aufnahme der Metallstäbe von der Richtmaschine in vorgegebenen Längen sukzessive in Längsrichtung der Metallstäbe vorgesehen ist, und weiters eine zumindest zwei parallele Magnetketten mit Magneten aufweisende Magnetfördereinrichtung angeordnet ist, sodass die Metallstäbe von der Aufnahme- und Übergabevorrichtung in Querrichtung der Metallstäbe auf die Magnetfördereinrichtung übergebbar und in Querrichtung der Metallstäbe zum gewünschten Verarbeitungsort beförderbar sind. Zu den dadurch erzielbaren Vorteilen wird auf die obige Beschreibung des Verfahrens verwiesen.

Die Magnetfördereinrichtung kann im Wesentlichen horizontal unter oder im Wesentlichen vertikal oder schräg neben der Aufnahme- und Übergabevorrichtung angeordnet sein.

Wenn die Aufnahme- und Übergabevorrichtung zur im Wesentlichen abstandslosen parallelen Aneinanderreihung der Metallstäbe auf der Magnetfördereinrichtung und Beförderung zum gewünschten Verarbeitungsort ausgebildet ist, kann eine besonders platzsparende Weiterleitung der Metallstäbe über kürzest mögliche Wege erzielt werden.

Die Magnetfördereinrichtung weist vorzugsweise aktivierbare und deaktivierbare Magnete auf, welche durch Elektromagnete oder auch durch Permanentmagnete, welche mechanisch aktivierbar und deaktivierbar sind, gebildet sein können.

Die Aufnahme- und Übergabevorrichtung kann Greifer zur Aufnahme der Metallstäbe in Längsrichtung und zur Übergabe der Metallstäbe in Querrichtung der Metallstäbe auf die Magnetfördereinrichtung aufweisen.

Wenn Hebeelemente zur Lösung der Metallstäbe von der Magnetfördereinrichtung vorgesehen sind, können die Metallstäbe von den Magnetfördereinrichtungen schonend und ohne großer Lärmentwicklung zum jeweiligen Verarbeitungsort weiter transportiert werden.

Diese Hebeelemente können im einfachsten Fall durch Keile oder keilähnliche Elemente gebildet sein, welche neben den Magnetfördereinrichtungen so angeordnet werden, dass bei Bewegung der Magnetketten der Abstand zwischen den Magneten und den Metallstäben solange erhöht wird, bis die Haltekraft der Magnet nicht mehr ausreicht und die Metallstäbe von den anderen Fördereinrichtungen oder Weiterverarbeitungseinrichtungen übernommen werden können.

Die Erfindung wird anhand der beigefügten Zeichnungen näher erläutert. Darin zeigen:
- Fig. 1: eine Ausführungsform einer Vorrichtung zum Bereitstellen von Metallstäben mit einer Aufnahme- und Übergabevorrichtung und darunter angeordneter horizontaler Magnetfördereinrichtung im Schrägriss;
- Fig. 2: eine Seitenansicht auf die Aufnahme- und Übergabevorrichtung und darunter angeordneter horizontaler Magnetfördereinrichtung gemäß Fig. 1;
- Fig. 3: eine Ausführungsform einer Vorrichtung zum Bereitstellen von Metallstäben mit einer Aufnahme- und Übergabevorrichtung und daneben angeordneter vertikaler Magnetfördereinrichtung im Schrägriss;
- Fig. 4: eine Seitenansicht auf die Aufnahme- und Übergabevorrichtung und daneben angeordneter vertikaler Magnetfördereinrichtung gemäß Fig. 3;
- Fig. 5: ein Detail der durch Greifer gebildeten Aufnahme- und Übergabevorrichtung gemäß den Figuren 1 und 2;
- Fig. 6: ein Detail der durch Greifer gebildeten Aufnahme- und Übergabevorrichtung gemäß den Figuren 3 und 4;
- Fig. 7: eine Ausführungsform der Übergabe der Metallstäbe von einer vertikal angeordneten Magnetfördereinrichtung mit einem feststehenden Keil und zur Beförderung zum gewünschten Verarbeitungsort; und
- Fig. 8: eine weitere Ausführungsform der Übergabe der Metallstäbe von einer vertikal angeordneten Magnetfördereinrichtung mit einem positionierbaren Keil und zur Beförderung zum gewünschten Verarbeitungsort.

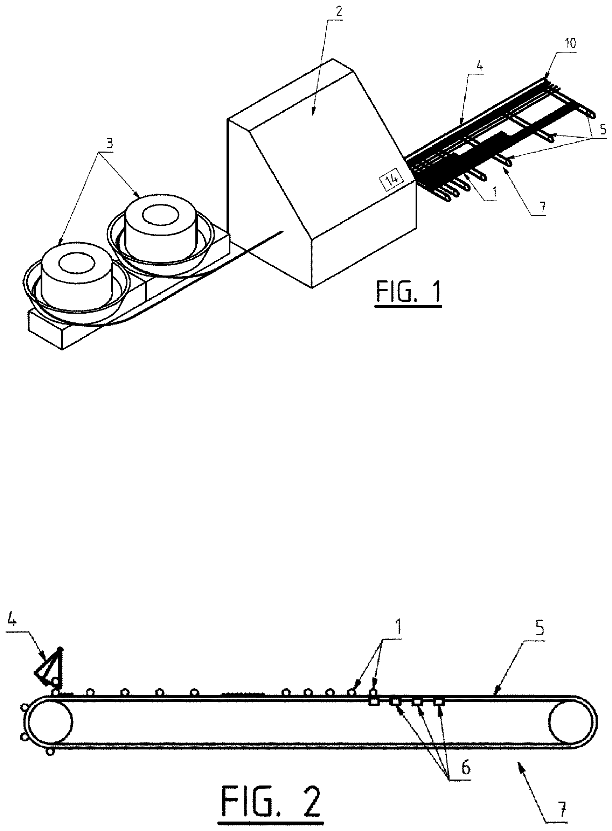

Fig. 1 zeigt eine Ausführungsform einer Vorrichtung 10 zum Bereitstellen von Metallstäben 1 mit einer Aufnahme- und Übergabevorrichtung 4 und eine darunter angeordnete horizontale Magnetfördereinrichtung 7 im Schrägriss. Die zu bewegenden Metallstäbe 1 werden in einer Richtmaschine 2 in entsprechenden vorgegebenen Längen lᵢ hergestellt, wobei das Drahtmaterial für die Herstellung der Metallstäbe 1 üblicherweise auf Rollen 3 angeordnet ist.

Im dargestellten Ausführungsbeispiel sind beispielsweise zwei Rollen 3 mit Drähten unterschiedlichen Durchmessers Dᵢ für die Herstellung der Metallstäbe 1 angeordnet. Die aus der Richtmaschine 2 in Längsrichtung beförderten Metallstäbe 1 gelangen auf eine Aufnahme- und Übergabevorrichtung 4, von wo sie in Querrichtung der Metallstäbe 1 auf eine zumindest zwei parallel angeordnete Magnetketten 5 mit Magneten 6 aufweisende Magnetfördereinrichtung 7 übergeben und in Querrichtung der Metallstäbe 1 zum gewünschten Verarbeitungsort befördert werden. Im dargestellten Ausführungsbeispiel befindet sich die Magnetfördereinrichtung 7 unterhalb der Aufnahme- und Übergabevorrichtung 4 und ist im Wesentlichen horizontal angeordnet. Die Aufnahme- und Übergabevorrichtung 4 und die Magnetfördereinrichtung 7, wie auch die Richtmaschine 2, sind vorzugsweise über eine entsprechende Steuerung 14 miteinander verbunden, sodass die Taktung entsprechend synchronisiert vorgenommen werden kann.

In Fig. 2 ist eine Seitenansicht auf die Aufnahme- und Übergabevorrichtung 4 und darunter angeordneter horizontaler Magnetfördereinrichtung 7 gemäß Fig. 1 dargestellt. Die Metallstäbe 1 werden von der Aufnahme- und Übergabevorrichtung 4 auf die Magnetfördereinrichtung 7 übergeben, wobei im dargestellten Ausführungsbeispiel Metallstäbe 1 mit größerem Durchmesser Dᵢ mit gewissem Abstand dᵢ zueinander und Metallstäbe 1 mit geringerem Durchmesser Dᵢ ohne Abstand dᵢ zueinander angeordnet sind. Vorteilhafterweise werden die Metallstäbe 1 ohne Abstand dᵢ zueinander auf der Magnetfördereinrichtung 7 platziert, sodass möglichst geringe Wege bei geringem Platzbedarf resultieren. Die Magnete 6 können in den Magnetketten 5 integriert, beispielsweise in dem Kunststoffmaterial des Förderbandes eingegossen, oder auch darunter angeordnet sein.

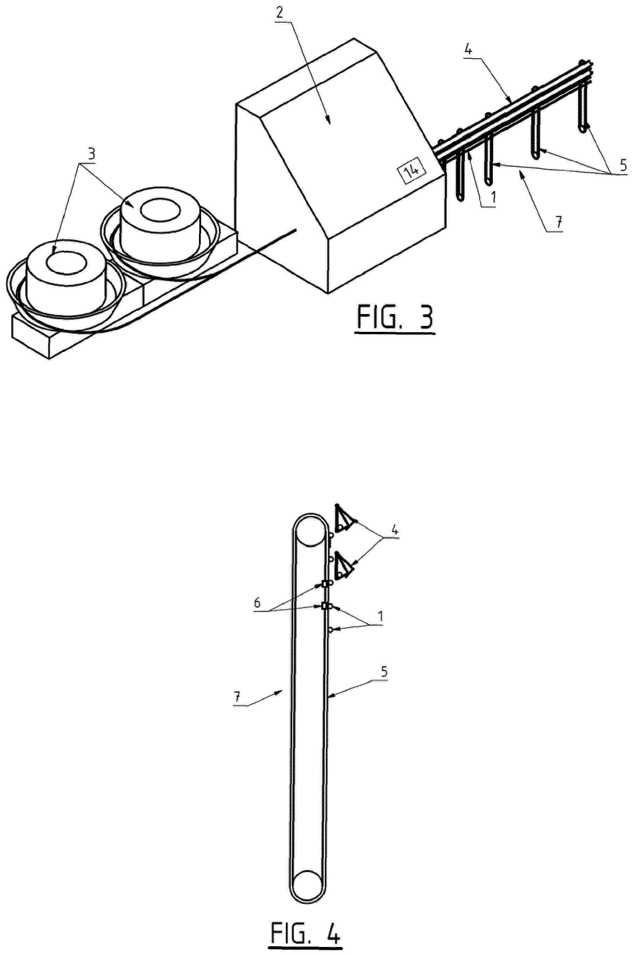

Fig. 3 zeigt eine alternative Ausführungsform einer Vorrichtung 10 zum Bereitstellen von Metallstäben 1 mit einer Aufnahme- und Übergabevorrichtung 4 und daneben angeordneter vertikaler Magnetfördereinrichtung 7 im Schrägriss. Im Gegensatz zur Ausführungsvariante gemäß den Fig. 1 und 2 ist die Magnetfördereinrichtung 7 im Wesentlichen vertikal oder schräg zur Vertikalen angeordnet, wodurch weniger Grundfläche in Anspruch genommen wird. Ebenso wie bei der Ausführungsvariante gemäß Fig. 1 kommen die Metallstäbe 1 aus der Richtmaschine 2 in den vorgegebenen Längen lᵢ sukzessive auf die Aufnahme- und Übergabevorrichtung 4 und werden von dort aus auf die neben der Aufnahme- und Übergabevorrichtung 4 befindliche Magnetfördereinrichtung 7 übergeben und durch die daran angeordneten Magneten 6 angezogen und gehalten.

Fig. 4 zeigt eine Seitenansicht auf die Aufnahme- und Übergabevorrichtung 4 und die daneben angeordnete vertikale Magnetfördereinrichtung 7 gemäß Fig. 3. Nachdem die Metallstäbe 1 von der Aufnahme- und Übergabevorrichtung 4 übernommen wurden, werden sie gesteuert von der allfälligen Steuerung 14 auf die parallelen Magnetketten 5 der Magnetfördereinrichtung 7 übergeben und von den Magneten 6 angezogen. Im dargestellten Ausführungsbeispiel sind die Metallstäbe 1 mit Abstand dᵢ auf den Magnetketten 5 platziert. Vorteilhafterweise werden die Metallstäbe 1 jedoch ohne Abstand dᵢ zueinander parallel auf den Magnetketten 5 der Magnetfördereinrichtung 7 transportiert, wodurch Platz und Wegstrecke eingespart werden kann.

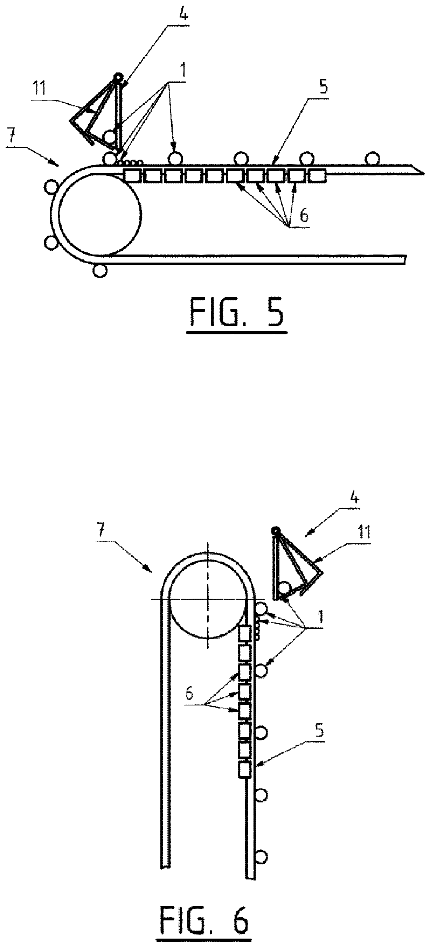

In Fig. 5 ist ein Detail der durch Greifer 11 gebildeten Aufnahme- und Übergabevorrichtung 4 gemäß den Figuren 1 und 2 dargestellt. Die von der Aufnahme- und Übergabevorrichtung 4 aufgenommenen Metallstäbe 1 werden durch Betätigung der Greifer 11 auf die Magnetfördereinrichtung 7 übergeben und an den jeweiligen gewünschten Verarbeitungsort weiter transportiert. Die Magnete 6 der Magnetketten 5 der Magnetfördereinrichtung 7 können vorzugsweise elektrisch oder mechanisch aktiviert und deaktiviert werden, sodass das Anziehen und Lösen der Metallstäbe 1 entsprechend gesteuert werden kann.

Fig. 6 zeigt ein Detail der durch Greifer 11 gebildeten Aufnahme- und Übergabevorrichtung 4 gemäß den Figuren 3 und 4. Auch hier werden die Metallstäbe 1 von der Richtmaschine 2 auf die Aufnahme- und Übergabevorrichtung 4 befördert und quer dazu durch Betätigung der Greifer 11 der Aufnahme- und Übergabevorrichtung 4 auf die Magnetfördereinrichtung 7 übergeben, wo sie vorzugsweise ohne Abstand dᵢ zueinander auf den Magnetketten 5 der Magnetfördereinrichtung 7 angeordnet und parallel zueinander weiterbefördert werden.

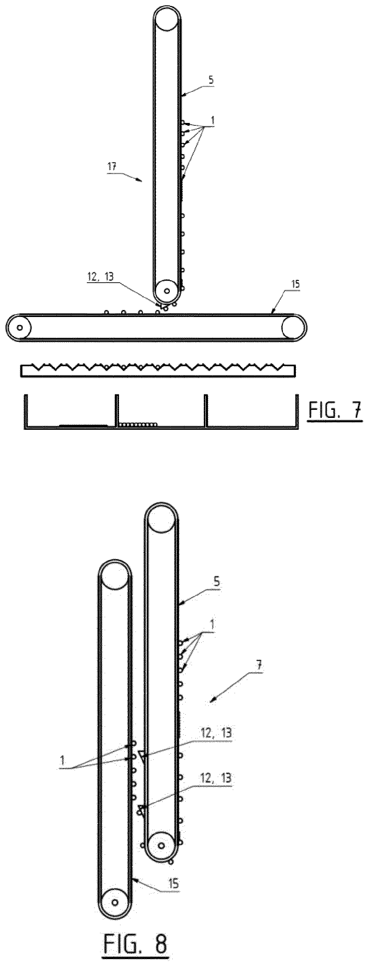

Fig. 7 zeigt eine Ausführungsform der Übergabe der Metallstäbe 1 mit einem feststehenden Keil 13 als Hebeelement 12 von einer vertikal angeordneten Magnetfördereinrichtung 7 auf eine horizontal angeordnete Fördereinrichtung 15 mit der die Metallstäbe 1 zum gewünschten Verarbeitungsort weiterbefördert wird. Durch den Keil 13 wird der Abstand zwischen den Metallstäben 1 und Magneten 6 der Magnetfördereinrichtung 7 soweit erhöht, bis die Anziehungskraft der Magnete 6 nicht mehr ausreicht und somit die Metallstäbe auf die Fördereinrichtung 15 übergeben werden. Im Beispiel gemäß Fig. 7 kann die Fördereinrichtung 15 durch eine herkömmliche Fördereinrichtung der Magnete gebildet sein, da die Metallstäbe 1 durch die Schwerkraft auf der Förderfläche liegen.

Schließlich zeigt Fig. 8 eine weitere Ausführungsform der Übergabe der Metallstäbe 1 von einer vertikal angeordneten Magnetfördereinrichtung 7 mit einem positionierbaren Keil 13 und zur Beförderung zum gewünschten Verarbeitungsort. Der Keil 13 kann an verschiedenen Positionen neben der Magnetfördereinrichtung 7 platziert werden und somit der Übergabeort auf die daneben angeordnete ebenfalls vertikale Fördereinrichtung 15 festgelegt werden. Durch die vertikale Anordnung der Fördereinrichtung 15 muss diese ebenfalls Magnete 6 oder entsprechende Haken oder dergleichen aufweisen, welche die Metallstäbe 1 an der gewünschten Position fixieren. Mit der Fördereinrichtung 15 werden die Metallstäbe 1 an den gewünschten Verarbeitungsort, beispielsweise eine Schweißeinrichtung zur Herstellung von Bewehrungsmatten, weiter transportiert.

## Patentansprüche

1. Verfahren zur Bereitstellung von Metallstäben (1), welche Metallstäbe (1) von Rollen (3) abgewickelt und in einer Richtmaschine (2) in vorgegebenen Längen (lᵢ) hergestellt werden, **dadurch gekennzeichnet, dass** die Metallstäbe (1) von der Richtmaschine (2) in den vorgegebenen Längen (lᵢ) sukzessive in Längsrichtung der Metallstäbe (1) auf eine Aufnahme- und Übergabevorrichtung (4) befördert werden, und von der Aufnahme- und Übergabevorrichtung (4) in Querrichtung der Metallstäbe (1) auf eine zumindest zwei parallel angeordnete Magnetketten (5) mit Magneten (6) aufweisende Magnetfördereinrichtung (7) übergeben und in Querrichtung der Metallstäbe (1) zum gewünschten Verarbeitungsort befördert werden.

2. Verfahren nach Anspruch 1, **dadurch gekennzeichnet, dass** die Metallstäbe (1) von der Aufnahme- und Übergabevorrichtung (4) auf eine im Wesentlichen horizontal unter oder eine im Wesentlichen vertikal oder schräg neben der Aufnahme- und Übergabevorrichtung (4) angeordnete Magnetfördereinrichtung (7) übergeben werden.

3. Verfahren nach Anspruch 1 oder 2, **dadurch gekennzeichnet, dass** die Metallstäbe (1) im Wesentlichen abstandslos parallel aneinandergereiht auf der Magnetfördereinrichtung (7) angeordnet und zum gewünschten Verarbeitungsort befördert werden.

4. Verfahren nach einem der Ansprüche 1 bis 3, **dadurch gekennzeichnet, dass** die Magnete (6) der Magnetfördereinrichtung (7) aktiviert und deaktiviert werden.

5. Verfahren nach Anspruch 4, **dadurch gekennzeichnet, dass** die Magnete (6) der Magnetfördereinrichtung (7) elektrisch oder mechanisch aktiviert und deaktiviert werden.

6. Verfahren nach einem der Ansprüche 1 bis 5, **dadurch gekennzeichnet, dass** die Metallstäbe (1) über Greifer (11) von der Aufnahme- und Übergabevorrichtung (4) in Querrichtung der Metallstäbe (1) auf die Magnetfördereinrichtung (7) übergeben werden.

7. Verfahren nach einem der Ansprüche 1 bis 6, **dadurch gekennzeichnet, dass** die Metallstäbe (1) über Hebeelemente (12) von der Magnetfördereinrichtung (7) gelöst und zum gewünschten Verarbeitungsort befördert werden.

8. Vorrichtung (10) zur Bereitstellung von Metallstäben (1), welche Metallstäbe (1) von Rollen (3) abgewickelt und in einer Richtmaschine (2) in vorgegebenen Längen (lᵢ) hergestellt sind, **dadurch gekennzeichnet, dass** eine Aufnahme- und Übergabevorrichtung (4) zur Aufnahme der Metallstäbe (1) von der Richtmaschine (2) in vorgegebenen Längen (lᵢ) sukzessive in Längsrichtung der Metallstäbe (1) vorgesehen ist, und dass weiters eine zumindest zwei parallele Magnetketten (5) mit Magneten (6) aufweisende Magnetfördereinrichtung (7) angeordnet ist, sodass die Metallstäbe (1) von der Aufnahme- und Übergabevorrichtung (4) in Querrichtung der Metallstäbe (1) auf die Magnetfördereinrichtung (7) übergebbar und in Querrichtung der Metallstäbe (1) zum gewünschten Verarbeitungsort beförderbar sind.

9. Vorrichtung (10) nach Anspruch 8, **dadurch gekennzeichnet, dass** die Magnetfördereinrichtung (7) im Wesentlichen horizontal unter oder im Wesentlichen vertikal oder schräg neben der Aufnahme- und Übergabevorrichtung (4) angeordnet ist.

10. Vorrichtung (10) nach Anspruch 8 oder 9, **dadurch gekennzeichnet, dass** die Aufnahme- und Übergabevorrichtung (4) zur im Wesentlichen abstandslosen parallelen Aneinanderreihung der Metallstäbe (1) auf der Magnetfördereinrichtung (7) und Beförderung zum gewünschten Verarbeitungsort ausgebildet ist.

11. Vorrichtung (10) nach einem der Ansprüche 8 bis 10, **dadurch gekennzeichnet, dass** die Magnetfördereinrichtung (7) aktivierbare und deaktivierbare Magnete (6) aufweisen.

12. Vorrichtung (10) nach Anspruch 11, **dadurch gekennzeichnet, dass** die Magnete (6) der Magnetfördereinrichtung (7) durch Elektromagnete (8) gebildet sind oder durch Permanentmagnete (9) gebildet sind, welche mechanisch aktivierbar und deaktivierbar sind.

13. Vorrichtung (10) nach einem der Ansprüche 8 bis 12, **dadurch gekennzeichnet, dass** die Aufnahme- und Übergabevorrichtung (4) Greifer (11) zur Aufnahme der Metallstäbe (1) in Längsrichtung und zur Übergabe der Metallstäbe (1) in Querrichtung der Metallstäbe (1) auf die Magnetfördereinrichtung (7) aufweist.

14. Vorrichtung (10) nach einem der Ansprüche 8 bis 13, **dadurch gekennzeichnet, dass** Hebeelemente (12) zur Lösung der Metallstäbe (1) von der Magnetfördereinrichtung (7) vorgesehen sind.

15. Vorrichtung (10) nach Anspruch 14, **dadurch gekennzeichnet, dass** die Hebeelemente (12) durch Keile (13) gebildet sind.

## Claims

1. Method for providing metal rods (1), which metal rods (1) are unwound from rollers (3) and produced in predetermined lengths (lᵢ) in a straightening machine (2), **characterised in that** the metal rods (1) are transported successively in the predetermined lengths (lᵢ) by the straightening machine (2) in the longitudinal direction of the metal rods (1) to a receiving and transfer apparatus (4), and from the receiving and transfer apparatus (4) said rods are transferred in the transverse direction of the metal rods (1) to a magnetic conveying device (7) comprising at least two parallel magnet chains (5) comprising magnets (6) and transported in the transverse direction of the metal rods (1) to the desired machining location.

2. Method according to claim 1, **characterised in that** the metal rods (1) are transferred from the receiving and transfer apparatus (4) to a magnetic conveying device (7) that is arranged substantially horizontally below or substantially vertically or obliquely next to the receiving and transfer apparatus (4).

3. Method according to either claim 1 or claim 2, **characterised in that** the metal rods (1) are arranged on the magnetic conveying device (7) in parallel next to one another such that substantially no gap is left therebetween and are transported to the desired machining location.

4. Method according to any of claims 1 to 3, **characterised in that** the magnets (6) of the magnetic conveying device (7) are activated and deactivated.

5. Method according to claim 4, **characterised in that** the magnets (6) of the magnetic conveying device (7) are activated and deactivated electrically or mechanically.

6. Method according to any of claims 1 to 5, **characterised in that** the metal rods (1) are transferred from the receiving and transfer device (4) in the transverse direction of the metal rods (1) to the magnetic conveying device (7) by means of grippers (11).

7. Method according to any of claims 1 to 6, **characterised in that** the metal rods (1) are released from the magnetic conveying device (7) by means of lifting elements (12) and transported to the desired machining location.

8. Apparatus (10) for providing metal rods (1), which metal rods (1) are unwound from rollers (3) and produced in predetermined lengths (lᵢ) in a straightening machine (2), **characterised in that** a receiving and transfer apparatus (4) is provided for receiving the metal rods (1) from the straightening machine (2) successively in predetermined lengths (lᵢ) in the longitudinal direction of the metal rods (1), and **in that**, moreover, a magnetic conveying device (7) comprising at least two parallel magnet chains (5) comprising magnets (6) is arranged in such a way that the metal rods (1) can be transferred from the receiving and transfer apparatus (4) in the transverse direction of the metal rods (1) to the magnetic conveying device (7) and can be transported in the transverse direction of the metal rods (1) to the desired machining location.

9. Apparatus (10) according to claim 8, **characterised in that** the magnetic conveying device (7) is arranged substantially horizontally under or substantially vertically or obliquely next to the receiving and transfer apparatus (4).

10. Apparatus (10) according to either claim 8 or claim 9, **characterised in that** the receiving and transfer apparatus (4) is designed to line the metal rods (1) up in parallel and such that no gap is left therebetween on the magnetic conveying device (7) and to transport said rods to the desired machining location.

11. Apparatus (10) according to any of claims 8 to 10, **characterised in that** the magnetic conveying device (7) comprises activatable and deactivatable magnets (6).

12. Apparatus (10) according to claim 11, **characterised in that** the magnets (6) of the magnetic conveying device (7) are formed of electromagnets (8) or permanent magnets (9), which can be activated and deactivated mechanically.

13. Apparatus (10) according to any of claims 8 to 12, **characterised in that** the receiving and transfer apparatus (4) comprises grippers (11) for receiving the metal rods (1) in the longitudinal direction and for transferring the metal rods (1) in the transverse direction of the metal rods (1) to the magnetic conveying device (7).

14. Apparatus (10) according to any of claims 8 to 13, **characterised in that** the lifting elements (12) are provided for releasing the metal rods (1) from the magnetic conveying device (7).

15. Apparatus (10) according to claim 14, **characterised in that** the lifting elements (12) are formed of wedges (13).

## Revendications

1. Procédé de mise à disposition de tiges métalliques (1), ces tiges métalliques (1) étant déroulées à partir de rouleaux (3) et fabriquées dans une machine à dresser (2) dans des longueurs prédéterminées (lᵢ), **caractérisé en ce que** les tiges métalliques (1) sont convoyées par la machine à redresseur (2) dans les longueurs prédéterminées (lᵢ) successivement dans la direction longitudinale des tiges métalliques (1) vers un dispositif de réception et de transfert (4), et transférées du dispositif de réception et de transfert (4) dans la direction transversale des tiges métalliques (1) vers un dispositif de convoyage magnétique (7) comprenant au moins deux chaînes magnétiques (5) parallèles avec des aimants (6) puis convoyées dans la direction transversale des tiges métalliques (1) vers le lieu de traitement souhaité.

2. Procédé selon la revendication 1, **caractérisé en ce que** les tiges métalliques (1) sont transférées du dispositif de réception et de transfert (4) vers un dispositif de convoyage magnétique (7) disposé globalement horizontalement sous ou globalement verticalement ou de manière oblique à côté du dispositif de réception et de transfert (4).

3. Procédé selon la revendication 1 ou 2, **caractérisé en ce que** les tiges métalliques (1) sont globalement juxtaposées parallèlement sans écart entre elles sur le dispositif de convoyage magnétique (7) et sont convoyées vers le lieu de traitement souhaité.

4. Procédé selon l'une des revendications 1 à 3, **caractérisé en ce que** les aimants (6) du dispositif de convoyage magnétique (7) sont activés et désactivés.

5. Procédé selon la revendication 4, **caractérisé en ce que** les aimants (6) du dispositif de convoyage magnétique (7) sont activés et désactivés électriquement ou mécaniquement.

6. Procédé selon l'une des revendications 1 à 5, **caractérisé en ce que** les tiges métalliques (1) sont transférées par l'intermédiaire de pinces (11) du dispositif de réception et de transfert (4) dans la direction transversale des tiges métalliques (1) vers le dispositif de convoyage magnétique (7).

7. Procédé selon l'une des revendications 1 à 6, **caractérisé en ce que** les tiges métalliques (1) sont détachées par l'intermédiaire d'éléments de leviers (12) du dispositif de convoyage magnétique (7) et convoyées vers le lieu de traitement souhaité.

8. Dispositif (10) pour la mise à disposition de tiges métalliques (1), ces tiges métalliques (1) étant déroulées à partir de rouleaux (3) et fabriquées dans une machine à dresser (2) dans des longueurs prédéterminées (lᵢ), **caractérisé en ce qu'**un dispositif de réception et de transfert (4) est prévu pour la réception des tiges métalliques (1) provenant de la machine à redresser (2) dans des longueurs prédéterminées (lᵢ) successivement dans la direction longitudinale des tiges métalliques (1), et **en ce qu'**en outre un dispositif de convoyage magnétique (7) comprenant au moins deux chaînes magnétiques (5) parallèles avec des aimants (6) est disposé, de façon à ce que les tiges métalliques (1) puissent être transférées du dispositif de réception et de transfert (4) dans la direction transversale des tiges métalliques (1) vers le dispositif de convoyage magnétique (7) et puissent être convoyées dans la direction transversale des tiges métalliques (1) vers le lieu de traitement souhaité.

9. Dispositif (10) selon la revendication 8, **caractérisé en ce que** le dispositif de convoyage magnétique (7) est disposé globalement horizontalement sous ou globalement verticalement ou de manière oblique à côté du dispositif de réception et de transfert (4).

10. Dispositif (10) selon la revendication 8 ou 9, **caractérisé en ce que** le dispositif de réception et de transfert (4) est conçu pour la juxtaposition globalement parallèle sans distance entre elles des tiges métalliques (1) sur le dispositif de convoyage magnétique (7) et le convoyage vers le lieu de traitement souhaité.

11. Dispositif (10) selon l'une des revendications 8 à 10, **caractérisé en ce que** le dispositif de convoyage magnétique (7) comprend des aimants (6) activables et désactivables.

12. Dispositif (10) selon la revendication 11, **caractérisé en ce que** les aimants (6) du dispositif de convoyage magnétique (7) sont constitués d'électro-aimants (8) ou d'aimants permanents (9), qui sont activables et désactivables mécaniquement.

13. Dispositif (10) selon l'une des revendications 8 à 12, **caractérisé en ce que** le dispositif de réception et de transfert (4) comprend des pinces (11) pour la réception des tiges métalliques (1) dans la direction longitudinale et pour le transfert des tiges métalliques (1) dans la direction transversale des tiges métalliques (1) vers le dispositif de convoyage magnétique (7).

14. Dispositif (10) selon l'une des revendications 8 à 13, **caractérisé en ce que** des éléments de leviers (12) sont prévus pour le détachement des tiges métalliques (1) du dispositif de convoyage magnétique (7).

15. Dispositif (10) selon la revendication 14, **caractérisé en ce que** les éléments de leviers (12) sont constitués de cales (13).
